(19) Europäisches Patentamt
European Patent Office
Office européen des brevets

(11) **EP 2 818 874 B1**

(12) **EUROPÄISCHE PATENTSCHRIFT**

(45) Veröffentlichungstag und Bekanntmachung des Hinweises auf die Patenterteilung:
**07.10.2015 Patentblatt 2015/41**

(51) Int Cl.:
*G01P 5/24* *(2006.01)*       *G01F 1/66* *(2006.01)*

(21) Anmeldenummer: **14167016.6**

(22) Anmeldetag: **05.05.2014**

(54) **Ultraschallmessvorrichtung**

Ultrasound measuring device

Dispositif de mesure des ultrasons

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.06.2013 DE 102013106544**

(43) Veröffentlichungstag der Anmeldung:
**31.12.2014 Patentblatt 2015/01**

(73) Patentinhaber: **SICK AG**
**79183 Waldkirch (DE)**

(72) Erfinder: **Romero, Andrés**
**79112 Freiburg (DE)**

(74) Vertreter: **Hehl, Ulrich**
**SICK AG**
**Intellectual Property**
**Erwin-Sick-Strasse 1**
**79183 Waldkirch (DE)**

(56) Entgegenhaltungen:
DE-A1- 10 206 134       DE-A1-102009 049 067
US-A- 6 116 080         US-A1- 2005 288 873

• XIAOYAN LI ET AL: "A Method Approach to the Extraction of the signal arrival from sonic logging signal on energy operator", INFORMATION SCIENCE AND ENGINEERING (ICISE), 2010 2ND INTERNATIONAL CONFERENCE ON, IEEE, PISCATAWAY, NJ, USA, 4. Dezember 2010 (2010-12-04), Seiten 4842-4845, XP031852566, DOI: 10.1109/ICISE.2010.5691725 ISBN: 978-1-4244-7616-9

EP 2 818 874 B1

**Beschreibung**

Die Erfindung betrifft eine Ultraschallmessvorrichtung und ein Verfahren zum Messen der Strömungsgeschwindigkeit von Fluiden nach dem Oberbegriff von Anspruch 1 beziehungsweise 9.

Fluidgeschwindigkeiten in Rohrleitungen und Kanälen können mittels Ultraschallmesstechnik nach dem Differenzlaufzeitverfahren ermittelt werden. Dabei werden Ultraschallpulse von einem Paar Ultraschallwandler ausgesandt und empfangen, die einander gegenüber an einer Wandung der Rohrleitung an den Enden eines Messpfads schräg zu der Strömung des Fluids angeordnet sind. Aus der Laufzeitdifferenz des Ultraschalls auf dem Messpfad mit der Strömung und in Gegenrichtung entgegen der Strömung wird die Strömungsgeschwindigkeit bestimmt. Die Ultraschallwandler arbeiten dabei wechselseitig als Sender und Empfänger. Die durch das Fluid transportierten Ultraschallsignale werden in Strömungsrichtung beschleunigt und gegen die Strömungsrichtung abgebremst. Die resultierende Laufzeitdifferenz wird mit geometrischen Größen zu einer mittleren Fluidgeschwindigkeit verrechnet. Mit der Querschnittsfläche ergibt sich daraus auch der Betriebsvolumenstrom, welcher bei nach Volumen abgerechnetem Fluid häufig die eigentlich interessierende Messgröße ist. Für eine höhere Messgenauigkeit können auch zusätzliche Messpfade mit weiteren Ultraschallwandlern vorgesehen sein.

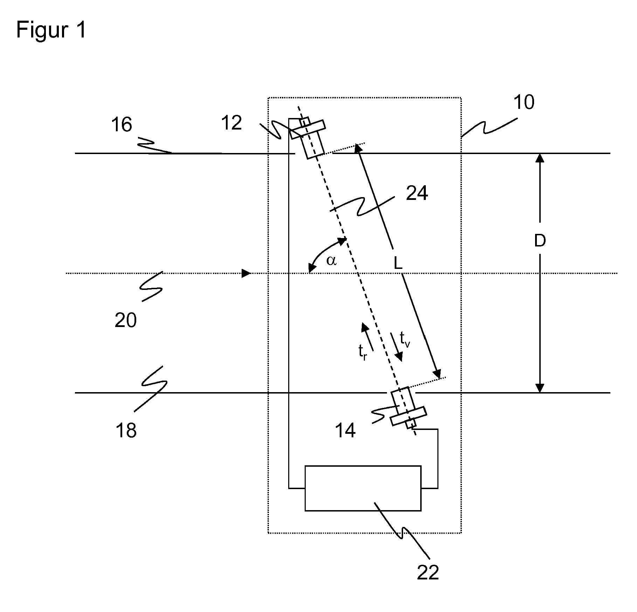

Dieses bekannte Messprinzip ist in Figur 1 dargestellt. In einer Messvorrichtung 10 sind zwei Ultraschallwandler 12, 14 in einem Winkel in der Wandung einer Rohrleitung 16 angeordnet, in der ein Fluid 18 in Pfeilrichtung 20 strömt. Die Ultraschallwandler 12, 14 arbeiten, von einer Steuer- und Auswertungseinheit 22 angesteuert, wechselweise als Sender und Empfänger. Die auf einem Messpfad 24 durch das Fluid 18 transportierten Ultraschallsignale werden in Strömungsrichtung beschleunigt und gegen die Strömungsrichtung abgebremst. Über nicht dargestellte Schaltungselemente, wie Verstärker und A/D-Wandler, werden der Steuer- und Auswertungseinheit 22 die jeweiligen Empfangssignale zugeführt und digital ausgewertet. Dazu wird die resultierende Laufzeitdifferenz gemäß

$$v = L/(2 \cos \alpha)\,(1/t_v - 1/t_r)$$

zu der gesuchten Strömungsgeschwindigkeit beziehungsweise gemäß

$$Q = v\,1/4\,D^2\,\pi$$

zu einem Betriebsvolumenstrom verrechnet, worin die geometrischen Verhältnisse wie in Figur 1 durch die folgenden Variablen beschrieben sind:

v: Strömungsgeschwindigkeit des Fluids in der Leitung
L: Länge des Messpfades zwischen den beiden Ultraschallwandlern
$\alpha$: Winkel, unter dem die Ultraschallwandler senden und empfangen
Q: Volumenstrom
D: Durchmesser der Leitung
$t_v$: Laufzeit des Ultraschalls mit der Strömung
$t_r$: Laufzeit des Ultraschalls gegen die Strömung.

Großen Einfluss auf die Genauigkeit der Messung der Laufzeitdifferenz hat die Bestimmung der zeitlichen Lage von Sende- und Empfangssignal. Dafür werden im Stand der Technik verschiedene Ansätze verfolgt. So ist bekannt, mit einem numerischen Optimierungsalgorithmus eine nichtlineare Modellfunktion an den empfangenen Hochfrequenzpuls anzupassen. Solche iterativen Verfahren sind aber ausgesprochen rechenintensiv, und parasitäre Effekte können eine Konvergenz im gesuchten globalen Minimum verhindern.

Ein anderer bekannter Ansatz bestimmt mittels eines FIR-Filters Hüllkurven der Empfangssignale und aus dem Phasenversatz der Hüllkurven gegenüber einer Referenz die Laufzeitdifferenz. Die Filterung kann Amplituden- und Phasenverzerrungen sowie Fehler durch Gruppenlaufzeiten einführen. In einem Verfahren gemäß DE 10 2005 051 669 B3 wird ebenfalls ein Phasenversatz gegenüber einer hier zeitlich verschiebbaren Referenz bestimmt, wobei anstelle von Hüllkurven die Empfangssignale selbst zu Grunde gelegt sind. Eine Auswertung der Phasendifferenz ist nur möglich, wenn die Signalqualität ausreicht. Der Signalverlauf ist aber temperaturabhängig und stimmt deshalb ohne Temperaturkompensation nicht immer mit der Referenz überein. Weiterhin erzeugt ein Jitter in der Zeitbasis ein Phasenrauschen und erschwert die Phasenbestimmung. Ohne zusätzliche Maßnahmen ist ein Phasenverfahren in seinem Eindeutigkeitsbereich durch die Signalfrequenz beschränkt.

Die EP 0 750 180 B1 offenbart ein Verfahren zur Bestimmung der Strömungsgeschwindigkeit mit einem ultraschallbasierten Laufzeitdifferenzverfahren. Um den Zeitpunkt des hochfrequenten Schwingungspakets des Ultraschalls festzulegen, wird dessen Beginn aus zwei Messpunkten einer Hüllkurve des Schwingungspakets ermittelt.

Aus der DE 102 06 134 A1 ist ein Ultraschall-Strömungsmesser bekannt, der sogenannte Upstream- und Downstreamempfangssignale digital auswertet. Dazu wird einerseits eine Kreuzkorrelation gebildet, aus der eine Phasenbeziehung ermittelt wird. Andererseits wird mit Hilfe einer Hilbert-Umwandlung eine Hüllkurve und aus deren Steigung eine Ankunftszeit des Signals bestimmt. Dies wird dazu verwendet, um Mehrdeutigkeiten der Bestimmung der Phasenbeziehung aufzulösen und somit einen echten Maximalwert zu finden.

Die Arbeit von Li et al. ‚"A Method Approach to the Extraction of the signal arrival from sonic logging signal on energy operator", 2nd International Conference on Information Science and Engineering (ICISE), IEEE, 4.12.2010, S. 4842-4845 beschreibt eine Auswertung von Schallwellen, welche eine inverse Fouriertransformation nutzt, um die Hüllkurve zu bestimmen.

Die US 6 116 080 offenbart die Verwendung der FFT zur Kreuzkorrelationsberechnung bei Ultraschall-Durchflussmessgeräten.

In der US 2005/028873 A1 wird für eine Durchflussmessung eine Kreuzkorrelation zweier Ultraschallsignale durch Multiplikation nach einer Fouriertransformation berechnet.

Die DE 10 2009 049 067 A1 beschreibt eine Ultraschall-Laufzeitdifferenzmessung, die aus einer Einhüllenden eine Grob-Zeitdifferenz und aus einer Phaseninformation eine Fein-Zeitdifferenz bestimmt.

Es ist deshalb Aufgabe der Erfindung, die Bestimmung der Laufzeitdifferenz aus Ultraschallsignalen zu verbessern.

Diese Aufgabe wird durch eine Ultraschallmessvorrichtung und ein Verfahren zum Messen der Strömungsgeschwindigkeit von Fluiden nach Anspruch 1 beziehungsweise 9 gelöst. Zwei Ultraschallwandler senden einander wechselseitig auf einem zwischen einander aufgespannten Ultraschallpfad jeweils ein Ultraschallsignal mit der Strömung und gegen die Strömung zu, um ein erstes und zweites digitales Ultraschallsignal zu erzeugen, wobei die Zuordnung der Bezeichnung der beiden Ultraschallsignale unerheblich ist. Die Erfindung geht dann von dem Grundgedanken aus, eine erste Laufzeitdifferenz aus Hüllkurven der Empfangssignale und dann mit dem Wissen der ersten Laufzeitdifferenz und vorzugsweise unter erneuter Verwendung von Zwischenauswertungen eine zweite Laufzeitdifferenz aus einer Kreuzkorrelation der beiden Empfangssignale zu bestimmen. Die erste Laufzeitdifferenz ist zumindest genau genug, um ein Zeitfenster der Kreuzkorrelation festzulegen, in dem außer dem gesuchten Hauptmaximum keine Nebenmaxima mehr liegen.

Die erste Laufzeitdifferenz und die zweite Laufzeitdifferenz ergeben zwei mit unterschiedlichen Auswertungen aufgefundene Messwerte für die eigentliche Laufzeitdifferenz. Häufig wird die zweite Laufzeitdifferenz präziser sein, so dass in einer Ausführungsform die Laufzeitdifferenz mit der zweiten Laufzeitdifferenz gleichgesetzt wird und die erste Laufzeitdifferenz nur eine Hilfsgröße bildet. In anderen Ausführungsformen fließen aber erste und zweite Laufzeitdifferenz in die Laufzeitdifferenz ein.

Die Erfindung hat den Vorteil, dass mit einer sehr robusten Auswertung eine besonders hohe Messgenauigkeit erreicht wird. Dabei bleibt eine schnelle Durchführung der Rechenoperationen und damit eine kurze Ansprechzeit möglich.

Das Ultraschallsignal ist vorzugsweise ein relativ kurzes, hochfrequentes Signal mit einer Amplitudenmodulation, die auch für die Hüllkurve eine präzise zeitliche Zuordnung ermöglicht. Beispiele einer solchen Amplitudenmodulation sind Wellen- oder Schwingungspakete mit pulsartiger und insbesondere Gaussischer Hüllkurve.

Die Auswertungseinheit ist bevorzugt dafür ausgebildet, für die Bestimmung der Hüllkurven diskrete Fouriertransformierte der Empfangssignale zu berechnen, die diskrete Fouriertransformierte mit einer Fensterfunktion zu multiplizieren und die Hüllkurve als Betrag der inversen diskreten Fouriertransformierten des Produkts zu erhalten. Nach der Fouriertransformation, etwa mittels FFT, werden störende Rauschanteile und Artefakte der Transformation durch die Fensterfunktion eliminiert, die an die bekannte Trägerfunktion und Bandbreite des ausgesandten Ultraschallsignals angepasst ist. Durch einfache Multiplikation im Frequenzbereich wird eine Faltung des Empfangssignals mit der Fensterfunktion sehr effizient ausgeführt. Zum verringerten Rechenaufwand trägt weiter bei, dass die fouriertransformierten Empfangssignale sowie die Implementierung für die Bestimmung einer inversen Fouriertransformierten vorzugsweise auch für die Bestimmung der zweiten Laufzeitdifferenz mittels Kreuzkorrelation verwendet werden können.

Die Auswertungseinheit ist bevorzugt dafür ausgebildet, die erste Laufzeitdifferenz als den zeitlichen Abstand zwischen den Maxima der ersten Hüllkurve und der zweiten Hüllkurve zu bestimmen. Da die Empfangssignale digital vorliegen, kann für die Lage des Maximums direkt der Abtastpunkt des größten aufgezeichneten Signalwerts der Hüllkurve verwendet werden. Aufwändigere Verfahren wie ein Funktionsfit an die durch das Sendesignal bekannte Hüllkurvenform sind prinzipiell denkbar, aber meist zu aufwändig.

Die Auswertungseinheit ist bevorzugt dafür ausgebildet, die Kreuzkorrelation als inverse diskrete Fouriertransformierte des Produkts der diskreten Fouriertransformierten des ersten Empfangssignals und der konjugiert Komplexen der diskreten Fouriertransformierten des zweiten Empfangssignals zu bestimmen. Wie auch bei einer Filterung mit einer Fensterfunktion wird so eine im Zeitbereich ausgesprochen aufwändige Berechnung durch eine einfache Multiplikation im Frequenzbereich ersetzt. Dabei liegen bei entsprechender Bestimmung der Hüllkurven die Fouriertransformierten der Empfangssignale ohnehin schon als fertiges Zwischenergebnis vor, und auch eine Implementierung für die abschließende inverse Fouriertransformation ist bereits vorhanden.

Die Auswertungseinheit ist bevorzugt dafür ausgebildet, das Zeitfenster für die Auswertung der Kreuzkorrelation mit einer Breite kleiner der Periode des Ultraschallsignals um die erste Laufzeitdifferenz zu legen. Die Kreuzkorrelation schwingt mit der Frequenz des Ultraschallsignals, denn die beiden Empfangssignale sind nicht nur für einen Zeitversatz Null, sondern auch für Vielfache der Trägerfrequenz des Ultraschallsignals zueinander ähnlich. Daher kann es bei direkter Auswertung der Kreuzkorrelation zu Verwechslungen zwischen dem gesuchten Hauptmaximum und einem Nebenmaximum kommen. Ein Zeitfenster, dessen Lage durch die aus der Hüllkurve bestimmte Laufzeitdifferenz geschätzt ist, schneidet den richtigen Peak beziehungsweise die richtige Schwingung des Hauptmaximums aus der Kreuzkorrelation aus. Dabei wird das Zeitfenster vorzugsweise so schmal gewählt, beispielsweise 50%, 25% oder 10% einer Periode der Trägerfrequenz, dass es mit hoher Sicherheit keine zusätzlichen Schwingungen oder Peaks enthält. Ein schmales Zeitfenster kann auch den Zeitaufwand bei der Bestimmung der zweiten Laufzeitdifferenz verringern.

Die Auswertungseinheit ist bevorzugt dafür ausgebildet, die zweite Differenzlaufzeit mittels eines Funktionsfits zu bestimmen. Damit wird eine Messauflösung besser als die Samplingrate der Empfangssignale ermöglicht. Aufgrund des Zeitfensters ist der Verlauf des Empfangssignals sehr einfach, und es genügt ein Polynomial- beziehungsweise sogar nur ein Parabelfit, der mit mäßigem Rechenaufwand zu bewältigen ist.

Die Auswertungseinheit ist bevorzugt dafür ausgebildet, die erste Differenzlaufzeit und/oder die zweite Differenzlaufzeit mehrfach zu bestimmen. Nach einer ersten derartigen Ausführungsform wird die erste Laufzeitdifferenz mehrfach bestimmt, weil der Aufwand im Vergleich mit einem Funktionsfit bei der Bestimmung der zweiten Laufzeitdifferenz recht gering ist. Dadurch wird auch bei stark gestörten Signalen ein gutes Zeitfenster gefunden. Außerdem repräsentiert eine Mittelung mehrerer Messungen der ersten Laufzeitdifferenz die gesuchte Laufzeitdifferenz mit verbesserter Genauigkeit. Nach einer zweiten derartigen Ausführungsform werden erste und zweite Laufzeitdifferenz in beliebiger Anzahl wiederholt bestimmt und als Laufzeitdifferenz ein gewichtetes Mittel gebildet, vorzugsweise mit höherem Gewicht für die zweiten Laufzeitdifferenzen.

Die Auswertungseinheit weist bevorzugt einen ersten digitalen Auswertungsbaustein für die parallele Ausführung zahlreicher einfacher Rechenschritte, insbesondere ein FPGA (Field Programmable Gate Array) oder eine GPU (Graphics Processing Unit) sowie einen zweiten digitalen Auswertungsbaustein für die serielle Ausführung komplexer Rechenschritte, insbesondere einen Mikroprozessor auf. Eine solche Kombination aus parallelen und seriellen Strukturen ist bei entsprechender Aufgabenverteilung auch mit einem vergleichsweise langsamen Mikroprozessor funktional einem leistungsstarken Mikroprozessor mindestens ebenbürtig und dabei kostengünstiger.

Der erste digitale Auswertungsbaustein ist bevorzugt für die Ausführung von diskreten Fouriertransformationen und inversen diskreten Fouriertransformationen und der zweite digitale Auswertungsbaustein für die Auswertung der Kreuzkorrelation ausgebildet. Die weiteren Aufgaben werden vorzugsweise entsprechend verteilt je nachdem, ob sie sich in einfache Befehle parallelisieren lassen: So übernimmt der erste digitale Auswertungsbaustein vorzugsweise auch die weiteren Berechnungen im Frequenzbereich wie punktweise Multiplikationen für Faltungen, Filterungen oder Kreuzkorrelationen, während die übrige Signalverarbeitung wie Plausibilitätsprüfungen, Verrechnen der ersten und zweiten Laufzeitdifferenz zu der Laufzeitdifferenz, Funktionsfits oder eigentliche Durchflussberechnung aus der Laufzeitdifferenz anhand der geometrischen Gegebenheiten von dem zweiten digitalen Baustein geleistet wird.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben. Das erfindungsgemäße Montageverfahren eignet sich selbstverständlich ebenso zum Ausbau oder Austausch eines Ultraschallwandlers.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:

Fig. 1      einen Grundaufbau einer laufzeitbasierten Ultraschallmessvorrichtung mit deren Messpfad und eingezeichneten geometrischen Variablen für die Durchflussbestimmung;

Fig. 2      beispielhafte zeitabhängige Amplitudenverläufe von je einem Empfangssignal mit und gegen die Strömung;

Fig. 3      die Fouriertransformierten zu den Empfangssignalen der Figur 2;

Fig. 4      aus den Empfangssignalen der Figur 2 bestimmte Hüllkurven;

Fig. 5      eine Kreuzkorrelation der beiden Empfangsignale der Figur 2; und

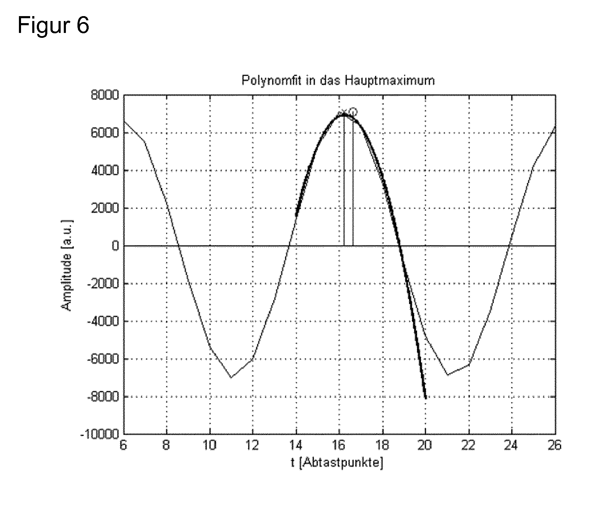

Fig. 6      eine Ausschnittsvergrößerung der Figur 5 zur Erläuterung des Auffindens des Hauptmaximums mit Hilfe eines Polynom- beziehungsweise Parabelfits.

Der einleitend anhand der Figur 1 beschriebene Grundaufbau einer Ultraschallmessvorrichtung 10 gilt auch für Ausführungsformen der Erfindung und wird deshalb an dieser Stelle nicht erneut beschrieben. Stattdessen wird die erfindungsgemäße Auswertung zur Bestimmung der Laufzeitdifferenz in der Steuer- und Auswertungseinheit 22 anhand von beispielhaften Signalverläufen erläutert.

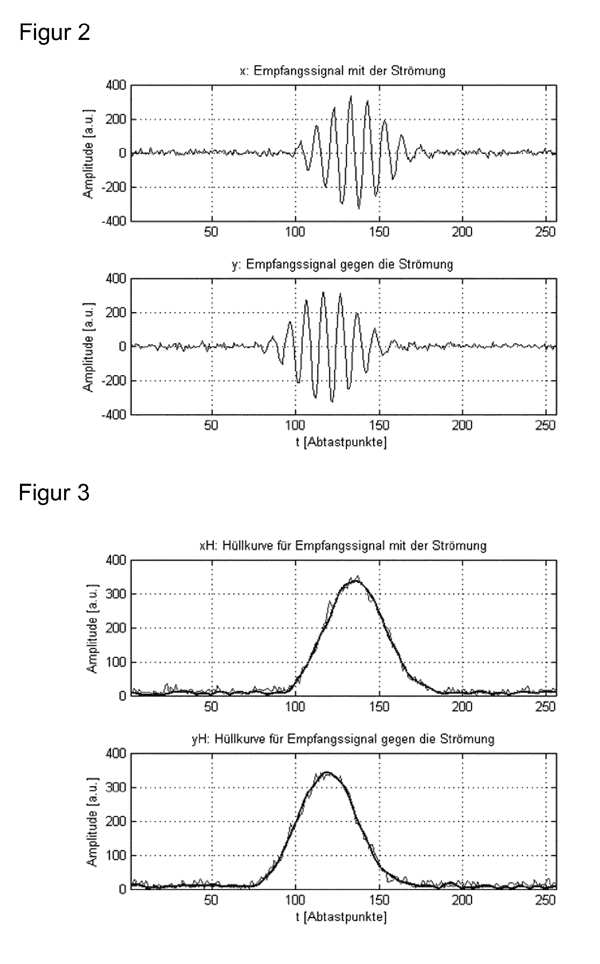

Figur 2 zeigt im oberen Teil einen zeitabhängigen Amplitudenverlauf eines ersten Empfangssignals x, das aufgezeichnet und digitalisiert wird, wenn der stromaufwärts angeordnete Ultraschallwandler 12 als Sender und der stromabwärts angeordnete Ultraschallwandler 14 als Empfänger arbeitet und somit das Ultraschallsignal mit der Strömung 16 übertragen wird. Entsprechend zeigt Figur 2 im unteren Teil einen zeitabhängigen Amplitudenverlauf eines zweiten Empfangssignals y bei Ultraschallübertragung gegen die Strömung 16.

Die beiden Empfangssignale x, y sind gegeneinander zeitlich verschoben, weil die Laufzeit des Ultraschalls gegen die Strömung verlängert ist. Um die nacheinander aufgenommenen Empfangssignale x, y vergleichbar zu machen, werden sie auf der Zeitachse gegen einen aus dem Sendezeitpunkt und gegebenenfalls der Schallgeschwindigkeit im Medium abgeleiteten Referenznullpunkt ausgerichtet. Ein Vergleich der Empfangssignale x, y, welcher direkt die beispielhaft dargestellte gegenseitige Zeitverschiebung ermittelt, führt zu der gesuchten Laufzeitdifferenz. Mit den gleichen Verfahren, mit denen diese gegenseitige Zeitverschiebung bestimmt wird, können auch die einzelnen Laufzeiten $t_v$, $t_r$ des jeweiligen Empfangssignals x, y durch Vergleich mit dem zugehörigen Sendesignal ermittelt werden. Dann ergibt sich die gesuchte Laufzeitdifferenz indirekt als $t_r$-$t_v$. Bei dem letztgenannten Vorgehen können sich Probleme ergeben, wenn das Empfangssignal x, y gegenüber dem Sendepuls auf dem Messpfad 24 verformt oder sogar in seinem Schwerpunkt verschoben wird. Deshalb ist ein direkter Vergleich von Empfangssignalen x, y robuster, welche den gleichen Messpfad 24 durchlaufen haben.

Wie in Figur 2 zu erkennen ist, handelt es sich bei den Ultraschallsignalen beispielhaft um Wellenpakete, bei denen einer Trägerfrequenz ein pulsartiger Verlauf aufmoduliert ist. Die zeitliche Lage des Empfangssignals x, y lässt sich somit sowohl aus der Hüllkurve des pulsartigen Verlaufs als auch aus den Schwingungen der Trägerfrequenz bestimmen.

Figur 3 zeigt in der Figur 2 entsprechender Darstellung und Aufteilung die Hüllkurven $x_H$, $y_H$ der Empfangssignale x, y. Zur Bestimmung der Hüllkurven $x_H$, $y_H$ werden zunächst die Fouriertransformierten X, Y der Empfangssignale x, y berechnet, beispielsweise über eine FFT (Fast Fourier Transformation):

$$x \circ\!\!\!-\!\!\bullet X;$$
$$y \circ\!\!\!-\!\!\bullet Y.$$

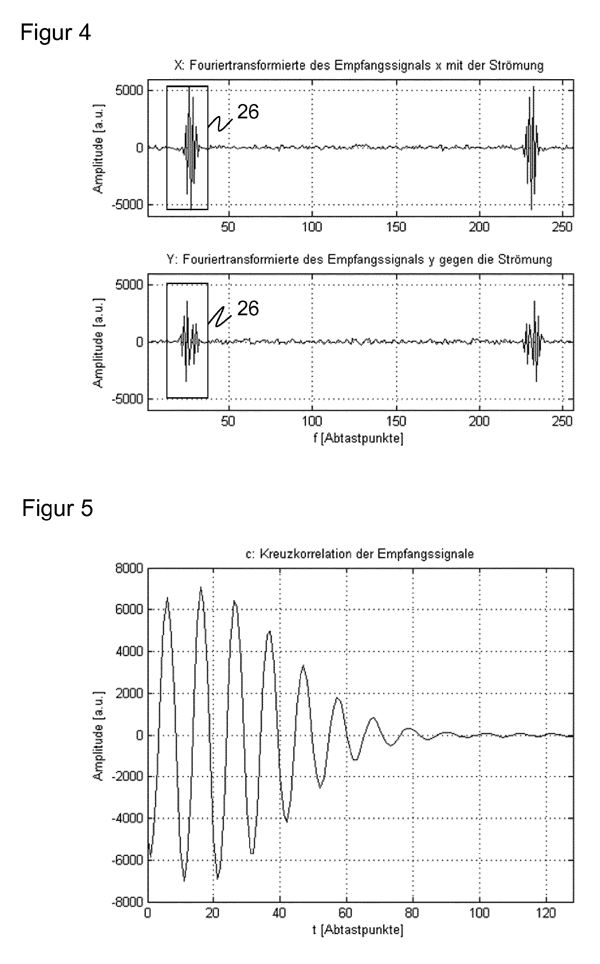

Die Fouriertransformierten X, Y sind in Figur 4 anhand ihres reellen Amplitudenspektrums illustriert. Es ergeben sich im Frequenzraum jeweils Anteile in einer Umgebung der Trägerfrequenz und ihren Harmonischen, hinzu kommen mögliche Artefakte beispielsweise der Transformation oder der diskreten Auflösung und endlichen Signalbreite im Zeitbereich sowie überall verteilte Rauschanteile.

Da die Trägerfrequenz und Bandbreite für das ausgesandte Ultraschallsignal bekannt ist, kann für eine Fensterung der Frequenzbereich in einer Umgebung der Trägerfrequenz bestimmt werden, wie in Figur 4 durch die eingezeichneten Rechtecke 26 illustriert. Dazu werden die Fouriertransformierten X, Y im Bereich des Fensters durch punktweise Multiplikation mit einer Fensterfunktion F mit einer endlichen Fensterbreite skaliert und außerhalb zu Null gesetzt.

Nach Rücktransformation in den Zeitbereich mittels inverser Foutiertransformation, insbesondere IFFT, und Betragsbildung ergeben sich die Hüllkurven $x_H$, $y_H$:

$$X \times F = X_A \,\bullet\!\!-\!\!\circ\, x_H;$$

$$Y \times F = Y_A \,\bullet\!\!-\!\!\circ\, y_H.$$

In Figur 3 sind zum Vergleich überlagernd mit den Hüllkurven $x_H$, $y_H$ mittels einer Hilbert-Transformation ermittelte Hüllkurven eingezeichnet. Zusätzlich zum höheren Aufwand für deren Berechnung sind deutlich kleine Schwankungen erkennbar, die eine Auswertung erheblich erschweren würden.

Aus den Betragsmaxima $|X_H|_{max}$ und $|y_H|_{max}$ der Hüllkurven $x_H$, $y_H$ ergeben sich die absoluten oder einzelnen Laufzeiten $t_v$, $t_r$ gegenüber dem Zeitnullpunkt, beispielsweise dem Sendezeitpunkt, und somit ein erster Wert für die gesuchte Laufzeitdifferenz $t_r$-$t_v$.

Für einen zweiten, präziseren Wert der Laufzeitdifferenz wird die Kreuzkorrelation c der beiden Empfangssignale x, y gebildet. Dies ist für die beiden Empfangssignale x, y der Figur 2 in Figur 5 beispielhaft dargestellt. Das Hauptmaximum liegt gerade bei einer zeitlichen Verschiebung, welche der gesuchten Laufzeitdifferenz entspricht. Allerdings ist das Berechnen der Kreuzkorrelation im Zeitbereich sehr rechenaufwändig, und die Identifizierung des Hauptmaximums gegenüber den Nebenmaxima ist algorithmisch schwer zu gewährleisten und gar nicht möglich, wenn wegen beeinträchtigter Signalqualität das gesuchte Hauptmaximum gar nicht den absolut größten Wert aufweist.

Aus diesen Gründen wird wie folgt ausgewertet. Die bereits für die Bestimmung der Hüllkurven $x_H$, $y_H$ berechneten Fouriertransformierten X, Y ermöglichen die Bestimmung der Kreuzkorrelation c durch eine einfache punktweise Multiplikation der einen Fouriertransformierten X mit der konjugiert komplexen anderen Fouriertransformierten Y und anschließendes Zurücktransformieren des Ergebnisses mittels inverser Fouriertransformation in den Zeitbereich:

$$X \times \overline{Y} = C \,\bullet\!\!-\!\!\circ\, c.$$

Aufgrund des aus den Hüllkurven abgeleiteten ersten Werts für die Laufzeitdifferenz kann die Suche nach dem Maximum der Kreuzkorrelation c auf ein kleines Zeitfenster beschränkt bleiben. Dieses Zeitfenster wird in eine Umgebung des ersten Werts gelegt. Zudem wird vorzugsweise die Breite des Zeitfensters auf nur einen Bruchteil einer Periode der Trägerfrequenz gesetzt. Dadurch befindet sich in dem Zeitfenster nur noch ein Maximum, und zwar das gesuchte Hauptmaximum. Prinzipiell kann nun ein zweiter Wert für die Laufzeit aus dem größten Samplingwert innerhalb des Zeitfensters abgeleitet werden.

Nach einer bevorzugten Ausführungsform wird aber mit den Werten des Zeitfensters ein Funktionsfit, insbesondere eines Polynoms oder einer Parabel durchgeführt. Dadurch wird die Messauflösung gegenüber der Samplingrate verbessert. Der rechenaufwändige Funktionsfit erfolgt dabei mit guten Anfangswerten und einem Datenbereich, in dem die rasche Konvergenz in dem gesuchten Hauptmaximum sichergestellt ist.

Für den auszugebenden Wert der Strömungsgeschwindigkeit oder des daraus abgeleiteten Durchflusses können nun verschiedene Schätzungen der Laufzeitdifferenz verwendet werden. In einer Ausführungsform wird einfach der aus der Kreuzkorrelation c bestimmte Wert genutzt und der Wert aus den Hüllkurven $X_H$, $Y_H$ als bloßer Hilfswert verworfen. In einer anderen Ausführungsform werden diese beiden Werte gegenseitig verglichen, also beispielsweise eine Plausibilitätsprüfung von aus der Hüllkurve bestimmten absoluten Laufzeiten $t_v$, $t_r$ und der aus der Kreuzkorrelation c bestimmten Differenzlaufzeit vorgenommen. In weiteren Ausführungsformen werden die Messungen mittels der Hüllkurven $X_H$, $Y_H$ und/oder der Kreuzkorrelation c wiederholt und gegenseitig plausibilisiert oder insbesondere gewichtete Mittelwerte gebildet.

Die Auswertungseinheit 22 weist vorzugsweise ein FPGA auf, mit dem zahlreiche einfache Rechenoperationen parallel ausgeführt werden können. Mit solchen Rechenoperationen lässt sich beispielsweise eine FFT oder IFFT implementieren, ebenso eine Faltung oder Kreuzkorrelation durch punktweise Multiplikation im Frequenzraum. Für andere Signalverarbeitungsoperationen, wie Funktionsfit, Berechnung eines Durchflusses nach der einleitend angegebenen Gleichung und ähnliches, weist die Auswertungseinheit einen Mikrocontroller auf, dessen notwendige Leistungsfähigkeit aufgrund der Unterstützung durch das FPGA deutlich geringer ausfallen kann. Bei dieser Aufteilung kann die Rechenzeit noch etwas weiter optimiert werden, indem für die Bestimmung des zweiten Werts der Laufzeitdifferenz statt der gesamten Kreuzkorrelationsfunktion c nur der Bereich innerhalb des Zeitfensters um den ersten Wert der Laufzeitdifferenz von dem ersten Auswertungsbaustein in den zweiten Auswertungsbaustein übertragen wird.

## Patentansprüche

1. Ultraschallmessvorrichtung (10) zum Messen der Strömungsgeschwindigkeit von Fluiden (18) mit mindestens zwei einander zugewandt angeordneten Ultraschallwandlern (12, 14), die zwischen sich einen schräg zu der Strömung durch das Fluid verlaufenden Messpfad (24) aufspannen, und mit einer Steuer- und Auswertungseinheit (22), die dafür ausgebildet ist, wechselseitig auf dem Messpfad (24) mit dem einen Ultraschallwandler (12, 14) ein Ultraschallsignal auszusenden und mit dem anderen Ultraschallwandler (14, 12) zu empfangen und so ein digitales erstes Empfangssignal (x) für mit der Strömung (16) übertragenen Ultraschall und ein digitales zweites Empfangssignal (y) für gegen die Strömung (16) übertragenen Ultraschall zu erzeugen und die Strömungsgeschwindigkeit aus einer Laufzeitdifferenz des ersten Empfangssignals (x) und des zweiten Empfangssignals (y) zu bestimmen,
**dadurch gekennzeichnet,**
**dass** die Auswertungseinheit (22) dafür ausgebildet ist, diskrete Fouriertransformierte (X, Y) der Empfangssignale (x, y) zu berechnen, die diskreten Fouriertransformierten (X, Y) jeweils mit einer aus einer Trägerfrequenz und Bandbreite des Ultraschallsignals festgelegten Fensterfunktion (F) zu multiplizieren, eine erste Hüllkurve ($x_H$) des ersten Empfangssignals (x) und eine zweiten Hüllkurve ($y_H$) des zweiten Empfangssignals (y) als Betrag der inversen diskreten Fouriertransformierten des jeweiligen Produkts zu erzeugen, eine erste Laufzeitdifferenz aus den Hüllkurven ($x_H$, $y_H$), eine zweite Laufzeitdifferenz durch Auswertung einer Kreuzkorrelation (c) des ersten Empfangssignals (x) und des zweiten Empfangssignals (y) in einem anhand der ersten Laufzeitdifferenz festgelegten Zeitfenster und die Laufzeitdifferenz aus der zweiten Laufzeitdifferenz oder aus der ersten Laufzeitdifferenz und der zweiten Laufzeitdifferenz zu bestimmen.

2. Ultraschallmessvorrichtung (10) nach Anspruch 1, wobei die Auswertungseinheit (122) dafür ausgebildet ist, die erste Laufzeitdifferenz als den zeitlichen Abstand zwischen den Maxima der ersten Hüllkurve ($x_H$) und der zweiten Hüllkurve ($y_H$) zu bestimmen.

3. Ultraschallmessvorrichtung (10) nach Anspruch 1 oder 2,
wobei die Auswertungseinheit (22) dafür ausgebildet ist, die Kreuzkorrelation (c) als inverse diskrete Fouriertransformierte des Produkts der diskreten Fouriertransformierten (X) des ersten Empfangssignals (x) und der konjugiert Komplexen der diskreten Fouriertransformierten (Y) des zweiten Empfangssignals (y) zu bestimmen.

4. Ultraschallmessvorrichtung (10) nach einem der vorhergehenden Ansprüche,
wobei die Auswertungseinheit (22) dafür ausgebildet ist, das Zeitfenster für die Auswertung der Kreuzkorrelation (c) mit einer Breite kleiner der Periode des Ultraschallsignals um die erste Laufzeitdifferenz zu legen.

**5.** Ultraschallmessvorrichtung (10) nach einem der vorhergehenden Ansprüche,
wobei die Auswertungseinheit (22) dafür ausgebildet ist, die zweite Differenzlaufzeit mittels eines Funktionsfits zu bestimmen.

**6.** Ultraschallmessvorrichtung (10) nach einem der vorhergehenden Ansprüche,
wobei die Auswertungseinheit (22) dafür ausgebildet ist, die erste Differenzlaufzeit und/oder die zweite Differenzlaufzeit mehrfach zu bestimmen.

**7.** Ultraschallmessvorrichtung (10) nach einem der vorhergehenden Ansprüche,
wobei die Auswertungseinheit (22) einen ersten digitalen Auswertungsbaustein für die parallele Ausführung zahlreicher einfacher Rechenschritte, insbesondere ein FPGA oder eine GPU, sowie einen zweiten digitalen Auswertungsbaustein für die serielle Ausführung komplexer Rechenschritte, insbesondere einen Mikroprozessor aufweist.

**8.** Ultraschallmessvorrichtung (10) nach einem der vorhergehenden Ansprüche,
wobei der erste digitale Auswertungsbaustein für die Ausführung von diskreten Fouriertransformationen und inversen diskreten Fouriertransformationen und der zweite digitale Auswertungsbaustein für die Auswertung der Kreuzkorrelation (C) ausgebildet ist.

**9.** Verfahren zum Messen der Strömungsgeschwindigkeit von Fluiden (18), bei dem nacheinander ein Ultraschallsignal auf einem schräg zu der Strömung durch das Fluid (18) verlaufenden Messpfad (24) in beiden Richtungen ausgesandt und empfangen wird, um ein digitales erstes Empfangssignal (x) für mit der Strömung (16) übertragenen Ultraschall und ein digitales zweites Empfangssignal (y) für gegen die Strömung (16) übertragenen Ultraschall zu erzeugen, und wobei die Strömungsgeschwindigkeit aus einer Laufzeitdifferenz des ersten Empfangssignals (x) und des zweiten Empfangssignals (y) bestimmt wird,
**dadurch gekennzeichnet,**
**dass** diskrete Fouriertransformierte (X, Y) der Empfangssignale (x, y) berechnet werden, die diskreten Fouriertransformierten (X, Y) jeweils mit einer aus einer Trägerfrequenz und Bandbreite des Ultraschallsignals festgelegten Fensterfunktion (F) multipliziert werden, eine erste Hüllkurve ($x_H$) des ersten Empfangssignals (x) und eine zweite Hüllkurve ($y_H$) des zweiten Empfangssignals (y) als Betrag der inversen diskreten Fouriertransformierten des jeweiligen Produkts erzeugt werden, eine erste Laufzeitdifferenz aus den Hüllkurve ($x_H$, $y_H$), eine zweite Laufzeitdifferenz durch Auswertung einer Kreuzkorrelation des ersten Empfangssignals (x) mit dem zweiten Empfangssignal (y) in einem anhand der ersten Laufzeitdifferenz festgelegten Zeitfenster und die Laufzeitdifferenz aus der zweiten Laufzeitdifferenz oder aus der ersten Laufzeitdifferenz und der zweiten Laufzeitdifferenz bestimmt wird.

**Claims**

**1.** An ultrasound measurement apparatus (10) for measuring the flow velocity of fluids (18) having at least two ultrasonic transducers (12, 14) which are arranged facing one another and which span a measurement path (24) between them which extends through the fluid obliquely to the flow and having a control and evaluation unit (22) which is configured to transmit an ultrasound signal alternately by the one ultrasonic transducer (12, 14) on the measurement path (24) and to receive it with the other ultrasonic transducer (14, 12) and thus to generate a digital first received signal (x) for ultrasound transmitted with the flow (16) and a digital second received signal (y) for ultrasound transmitted against the flow (16) and to determine the flow velocity from a transit time difference of the first received signal (x) and of the second received signal (y),
**characterised in that**,
the evaluation unit (22) is configured to calculate discrete Fourier transforms (X, Y) of the received signals (x, y), to multiply the discrete Fourier transforms (X, Y) in each case by a window function (F) determined from a carrier frequency and a bandwidth of the ultrasound signal, to generate a first envelope ($x_H$) of the first received signal (x) and a second envelope ($y_H$) of the second received signal (y) as an amount of the inverse discrete Fourier transform of the respective product, to determine a first transit time difference from the envelopes ($x_H$, $y_H$), to determine a second transit time difference by evaluating a cross-correlation (c) of the first received signal (x) and of the second received signal (y) in a time window determined using the first transit time difference and to determine the transit time difference from the second transit time difference or from the first transit time difference and the second transit time difference.

**2.** An ultrasound measurement apparatus (10) in accordance with claim 1,
wherein the evaluation unit (122) is configured to determine the first transit time difference as the time interval between the maxima of the first envelope ($x_H$) and of the second envelope ($y_H$).

**3.** An ultrasound measurement apparatus (10) in accordance with claim 1 or claim 2,
wherein the evaluation unit (22) is configured to determine the cross-correlation (c) as an inverse discrete Fourier transform of the product of the discrete Fourier transform (X) of the first received signal (x) and of the complex conjugate of the discrete Fourier transform (Y) of the second received signal (y).

4. An ultrasound measurement apparatus (10) in accordance with any one of the preceding claims, wherein the evaluation unit (22) is configured to place the time window for the evaluation of the cross-correlation (c) with a width smaller than the period of the ultrasound signal by the first transit time difference.

5. An ultrasound measurement apparatus (10) in accordance with any one of the preceding claims, wherein the evaluation unit (22) is configured to determine the second difference transit time by means of a function fit.

6. An ultrasound measurement apparatus (10) in accordance with any one of the preceding claims, wherein the evaluation unit (22) is configured to determine the first difference transit time and/or the second difference transit time multiple times.

7. An ultrasound measurement apparatus (10) in accordance with any one of the preceding claims, wherein the evaluation unit (22) has a first digital evaluation module for the parallel carrying out of a number of simple computing steps, in particular an FPGA or a GPU, as well as a second digital evaluation module for the serial carrying out of complex computing steps, in particular a microprocessor.

8. An ultrasound measurement apparatus (10) in accordance with any one of the preceding claims, wherein the first digital evaluation module is configured for the carrying out of discrete Fourier transformations and inverse discrete Fourier transformations and the second digital evaluation module is configured for the evaluation of the cross-correlation (c).

9. A method for measuring the flow velocity of fluids (18), in which an ultrasound signal is consecutively transmitted and received in both directions on a measurement path (24) extending through the fluid (18) obliquely to the flow to generate a digital first received signal (x) for ultrasound transmitted with the flow (16) and a digital second received signal (y) for ultrasound transmitted against the flow (16) and wherein the flow velocity is determined from a transit time difference of the first received signal (x) and of the second received signal (y),
**characterised in that**
discrete Fourier transforms (X, Y) of the received signals (x, y) are calculated, the discrete Fourier transforms (X, Y) are in each case multiplied by a window function (F) determined from a carrier frequency and a bandwidth of the ultrasound signal, a first envelope ($x_H$) of the first received signal (x) and a second envelope ($y_H$) of the second received signal (y) are generated as an amount of the inverse discrete Fourier transform of the respective product, a first transit time difference is determined from the envelopes ($x_H$, $y_H$), a second transit time difference is determined by evaluating a cross-correlation of the first received signal (x) with the second received signal (y) in a time window determined using the first transit time difference and the transit time difference is determined from the second transit time difference or from the first transit time difference and the second transit time difference.

## Revendications

1. Dispositif de mesure à ultrasons (10) pour la mesure de la vitesse d'écoulement de fluides (18) comprenant au moins deux transducteurs à ultrasons (12, 14) agencés tournés l'un vers l'autre, qui couvrent un trajet de mesure (24) s'étendant à travers le fluide en oblique par rapport à l'écoulement, et comprenant une unité de commande et d'évaluation (22) qui est réalisée pour émettre un signal ultrasonore vers le trajet de mesure (24) avec l'un des transducteurs à ultrasons (12, 14) et recevoir en alternance ce signal avec l'autre transducteur à ultrasons (14, 12), et ainsi engendrer un premier signal de réception numérique (x) pour les ultrasons transmis avec l'écoulement (16) et un second signal de réception numérique (y) pour les ultrasons transmis en sens contraire à l'écoulement (16) et pour déterminer la vitesse d'écoulement à partir d'une différence du temps de parcours du premier signal de réception (x) et du second signal de réception (y),
**caractérisé en ce que**
l'unité d'évaluation (22) est réalisée pour calculer des transformées de Fourier discrètes (X, Y) des signaux de réception (x, y), pour multiplier les transformées de Fourier discrètes (X, Y) respectivement avec une fonction fenêtre (F) fixée à partir d'une fréquence porteuse et d'une largeur de bande du signal à ultrasons, pour engendrer une première courbe enveloppe ($x_H$) du premier signal de réception (x) et une seconde courbe enveloppe ($y_H$) du second signal de réception (y) à titre de valeur de la transformée de Fourier discrète inverse du produit respectif, pour déterminer une première différence de temps de parcours à partir des courbes enveloppe ($x_H$, $y_H$), une seconde différence de temps de parcours par évaluation d'une corrélation croisée (c) du premier signal de réception (x) et du second signal de réception (y) dans une fenêtre temporelle fixée au moyen de la première différence, et pour déterminer la différence de temps de parcours à partir de la seconde différence de temps de parcours ou à partir de la première différence de temps de parcours et de la seconde différence de temps de parcours.

2. Dispositif de mesure à ultrasons (10) selon la revendication 1,
dans lequel l'unité d'évaluation (122) est réalisée pour déterminer la première différence de temps de parcours comme étant l'écart temporel entre les maxima de la première courbe enveloppe ($x_H$) et de la seconde courbe enveloppe ($y_H$).

3. Dispositif de mesure à ultrasons (10) selon la revendication 1 ou 2,
dans lequel l'unité d'évaluation (22) est réalisée pour déterminer la corrélation croisée (c) sous forme de transformées de Fourier discrètes inverses du produit des transformées de Fourier discrètes (X) du premier signal de réception (x) et du complexe conjugué de la transformée de Fourier discrète (Y) du second signal de réception (y).

4. Dispositif de mesure à ultrasons (10) selon l'une des revendications précédentes,
dans lequel l'unité d'évaluation (22) est réalisée pour définir la fenêtre temporelle pour l'évaluation de la corrélation croisée (c) avec une largeur plus petite que la période du signal à ultrasons à raison de la première différence de temps de parcours.

5. Dispositif de mesure à ultrasons (10) selon l'une des revendications précédentes,
dans lequel l'unité d'évaluation (22) est réalisée pour déterminer la seconde différence de temps de parcours au moyen d'une adaptation fonctionnelle.

6. Dispositif de mesure à ultrasons (10) selon l'une des revendications précédentes,
dans lequel l'unité d'évaluation (22) est réalisée pour déterminer la première différence de temps de parcours et/ou la seconde différence de temps de parcours plusieurs fois.

7. Dispositif de mesure à ultrasons (10) selon l'une des revendications précédentes,
dans lequel l'unité d'évaluation (22) comprend un premier composant d'évaluation numérique pour l'exécution parallèle d'un grand nombre d'opérations de calcul simples, en particulier un FPGA ou une GPU, ainsi qu'un second composant d'évaluation numérique pour l'exécution en série d'opérations de calcul complexes, en particulier un microprocesseur.

8. Dispositif de mesure à ultrasons (10) selon l'une des revendications précédentes,
dans lequel le premier composant d'évaluation numérique est réalisé pour l'exécution de transformations de Fourier discrètes et de transformations de Fourier discrètes inverses, et le second composant d'évaluation numérique est réalisé pour l'évaluation de la corrélation croisée (C).

9. Procédé pour mesurer la vitesse d'écoulement de fluides (18), dans lequel on émet et on reçoit successivement un signal ultrasonore dans les deux directions sur un trajet de mesure (24) s'étendant à travers le fluide (18) en oblique par rapport à l'écoulement, afin d'engendrer un premier signal de réception numérique (x) pour les ultrasons transmis avec l'écoulement (16) et un second signal de réception numérique (y) pour les ultrasons transmis en sens contraire à l'écoulement (16), et dans lequel on détermine la vitesse d'écoulement à partir d'une différence de temps de parcours du premier signal de réception (x) et du second signal de réception (y),
**caractérisé en ce que**
on calcule des transformées de Fourier discrètes (X, Y) des signaux de réception (x, y), les transformées de Fourier discrètes (X, Y) sont multipliées respectivement avec une fonction fenêtre (F) déterminée à partir d'une fréquence porteuse et de la largeur de bande du signal à ultrasons, on engendre une première courbe enveloppe ($x_H$) du premier signal de réception (x) et une seconde courbe enveloppe ($y_H$) du second signal de réception (y) comme valeur de la transformée de Fourier discrète inverse du produit respectif, on détermine une première différence de temps de parcours à partir des courbes enveloppe ($x_H$, $y_H$), on détermine une seconde différence de temps de parcours par évaluation d'une corrélation croisée du premier signal de réception (x) avec le second signal de réception (y) dans une fenêtre temporelle fixée au moyen de la première différence de temps de parcours, et on détermine la différence de temps de parcours à partir de la seconde différence de temps de parcours ou à partir de la première différence de temps de parcours et de la seconde différence de temps de parcours.

Figur 1

## Figur 2

x: Empfangssignal mit der Strömung

y: Empfangssignal gegen die Strömung

t [Abtastpunkte]

## Figur 3

xH: Hüllkurve für Empfangssignal mit der Strömung

yH: Hüllkurve für Empfangssignal gegen die Strömung

t [Abtastpunkte]

Figur 4

X: Fouriertransformierte des Empfangssignals x mit der Strömung

Y: Fouriertransformierte des Empfangssignals y gegen die Strömung

Figur 5

c: Kreuzkorrelation der Empfangssignale

Figur 6

Polynomfit in das Hauptmaximum

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005051669 B3
- EP 0750180 B1
- DE 10206134 A1

- US 6116080 A
- US 2005028873 A1
- DE 102009049067 A1

**In der Beschreibung aufgeführte Nicht-Patentliteratur**

- A Method Approach to the Extraction of the signal arrival from sonic logging signal on energy operator. **LI et al.** 2nd International Conference on Information Science and Engineering (ICISE). IEEE, 12. April 2010, 4842-4845